# EUROPEAN PATENT SPECIFICATION

(11) **EP 3 140 576 B1**
(45) Date of publication and mention of the grant of the patent: **24.11.2021**
(21) Application number: 15789860.2
(22) Date of filing: 06.05.2015
(51) Int. Cl.: F16K 17/40, B64D 37/14

(54) **FUEL SYSTEM BREAKAWAY VALVE REACTION BRIDGE AND REACTION COLLAR**
LOSBRECHVENTILREAKTIONSBRÜCKE EINES KRAFTSTOFFSYSTEMS UND REAKTIONSKRAGEN
PONT DE RÉACTION DE SOUPAPE D'ARRÊT DE SYSTÈME DE KÉROSÈNE ET BRIDE DE RÉACTION

(30) Priority: 09.05.2014 US 201461990747 P
(43) Date of publication of application: 15.03.2017
(73) Proprietor: Sikorsky Aircraft Corporation, Stratford, CT 06615 (US)
(72) Inventor: CHASEN, Scott A., Orange, Connecticut 06477 (US); ROGSTAD, Robert R., Woodstock, Connecticut 06281 (US); BIEHL, Chris John, Hamden, Connecticut 06518 (US)
(74) Representative: Schmitt-Nilson Schraud Waibel Wohlfrom Patentanwälte Partnerschaft mbB
(86) International application number: PCT/US2015/029398
(87) International publication number: WO 2015/171716

(56) References cited:
- WO-A1-98/28059
- US-A- 3 026 070
- US-A- 4 323 094
- US-A- 4 361 165
- US-A- 4 609 004
- US-A- 5 755 425
- US-A- 5 924 445
- None

## Description

### BACKGROUND OF THE INVENTION

The subject matter disclosed herein relates to aircraft. More specifically, the subject disclosure relates to fuel bladder structures for aircraft.

Aircraft, such as airplanes, helicopters, turbo props and tilt rotor aircraft typically often include one or more flexible containers, or bladders, for storage of fuel on board the aircraft. The bladder provides a sealed volume for the storage of fuel as an alternative to forming a sealed chamber in the aircraft structure. Mounting the bladder in such a chamber is typically difficult and costly. The bladders include fittings and/or connections for filling the bladder with fuel, outputting the fuel to an aircraft engine, and may also include ancillary components such as fuel pumps and fuel filters and vent fittings.

In a typical aircraft, most often a helicopter, the bladders are contained in sponsons, or projections from the fuselage of the aircraft. As such, the fuel bladders are contained in a space external to the fuselage and do not negatively impact cargo or passenger space in the aircraft. Further, the external location allows for easy access for installation and mounting of the fuel bladders into the sponsons.

The fuel bladder further must include crashworthiness features to prevent leakage of the fuel bladder in the case of fuel cell tear away, hose/device pull out, structure separation or other occurrence preventing fuel from spilling into the cockpit and/or passenger compartment. Embedding the fuel bladder into the fuselage presents unique challenges to fulfilling this requirement.

US 4,361,165 discloses breakaway pipeline coupling is described which comprises first and second pipe sections forming a fluid seal and designed to separate at a predetermined axial load. Its plurality of piston and cylinder pressure compensating devices are arranged around the exterior of the pipe sections to hold them together until separation. Shear pins or shear studs passing between the pipeline sections will fail when the coupling is subjected to an external tensile force exceeding the predetermined maximum force. Its pressure compensating devices apply a compression load on the coupling to counteract the tension load exerted by internal pressure in the pipeline. Its pressure compensating devices included pistons movable axially within cylinders in response to pressure differentials, and porting or tubing for exposing one side of the piston to the internal pressure within the coupling. When internal pressure produces a force which tends to separate the coupling, an opposing compressive force resulting from the pressure acting on the pistons tends to hold the coupling together. External tensile force tending to separate the coupling are resisted by the shear pins, but when a predetermined maximum external tensile force is exceeded, the shear pins fail and the pipeline sections separate. A first, normally closed valve is located within its first pipeline section, and a second, normally closed valve, or a valve lock pin, is located in its second pipeline section. When its pipeline sections are joined together, the valve(s) is locked in the open position and fluid can flow freely through the coupling and the pipeline in which the coupling is assembled. As the sections move relative to one another, each valve is shut to that the contents of the pipeline are not discharged into the environment.

WO 1998/028059 A1 discloses a fuel intake device for a fuel system having a fuel tank for containing a supply of fuel and an internal fuel feed line which is disposed internally of the fuel tank and which extends into a sump region. Its fuel intake device has a filter assembly which envelopes an end portion of the internal fuel feed line and which includes a lower fuel filtering portion and an upper fuel bypass portion. Its lower fuel filtering portion has a plurality of fine apertures therein for facilitating a primary flow of fuel and for filtering debris from the supply of fuel in a normal operating mode. Its upper fuel bypass portion has a plurality of coarse apertures for facilitating a secondary flow of fuel in a bypass operating mode. Its filter assembly is situated about the end portion such that the inlet orifice thereof is disposed internally of the lower fuel filtering portion and such that the coarse apertures of the upper bypass portion are distally spaced from the inlet orifice. Its fuel intake device is further characterized by a shroud member disposed about the filter assembly, which shroud member includes an upper end portion disposed in sealed combination with an external peripheral surface of the internal fuel feed line and a lower end portion which extends into the sump region of the fuel tank. The lower end portion, furthermore, defines an opening for facilitating fuel flow to the filter assembly.

US 4,609,004 discloses an aircraft safety fuel tank is provided and consists of a safety seal fuel filler neck secured to an inlet opening of a housing, a quick coupling engine fuel line holder secured to an outlet opening of the housing, a protective covering wrapped around the housing and at least one strap for supporting the tank to the aircraft.

US 3,026,070 discloses fluid containers such as fittings for use with flexible fluid containers that are crash resistant in construction, fitting that position a flexible container in a supporting structure but will release it when subjected to predetermined stresses or impacts, fittings that are readily adaptable to standard flexible containers or fuel cell constructions, fittings for flexible containers that is positive and foolproof in its action.

US 4,323,094 discloses a crashworthy aircraft fuel storage system normally operative so that the fuel tank, fuel shut-off valve assembly and the fuel inlet connection to the fuel tank are normally assembled to be free floating with respect to the aircraft structure, and further operative so that crash load conditions will cause the fuel tank to move with respect to the aircraft structure to thereby cause fuel inlet fitting to move therewith and into contact with the aircraft structure so as to impose a momentum force on the fuel shut-off valve assembly to cause fracture thereof and separation of the fuel tank from the fuel inlet fitting, with both parts so separated, sealed to prevent fuel flow therethrough.

US 5,755,425 discloses a fuel bladder having a flexible bladder wall with a fuel out aperture in which a tubular penetration body extends through the aperture and an interior flange on the tubular penetration abuts the interior side of the flexible bladder wall. Its tubular valve connection member is superimposed over the fuel outlet aperture such that its outer peripheral surface abuts the inner peripheral surface of the tubular penetration body. A washer and a lock nut are positioned over the tubular penetration member to press the fuel bladder wall against the tubular penetration member interior flange. An O-ring seal is positioned between the proximate surface of the tubular penetration body and the interior side of the bladder wall. Another O-ring seal is positioned adjacent the outer peripheral surface of the tubular penetration body and the exterior side of the bladder wall.

US 5,924,445 discloses a fuel intake device for a fuel system having a fuel tank for containing a supply of fuel and an internal fuel feed line which is disposed internally of the fuel tank. Its fuel intake device is operative to provide uninterrupted fuel flow in icing conditions and is characterized by a flexible fuel filter having a plurality of primary flow apertures apertures therein for facilitating a primary flow of fuel, a bypass for providing a secondary flow of fuel to the internal fuel feed line when an accumulation of ice restricts the primary flow of fuel through the primary flow apertures, and force bias for rapidly reconfiguring the flexible fuel filter for forcibly shedding the accumulation of ice, thereby restoring the primary flow of fuel. Its flexible fuel filter is reconfigurable from an extended position to a collapsed position in response to a threshold pressure differential across the flexible fuel filter. Upon sensing the threshold pressure differential, the bypass provides a secondary fuel flow effecting a nominal pressure differential across the flexible fuel filter. In response to the nominal pressure differential, the force bias is actuated or released so as to rapidly expand the flexible fuel filter.

Embodiments of the invention may solve one or more of the problems of the art, with the solutions set forth in the independent claims and refinements as recited in the dependent claims.

### BRIEF DESCRIPTION OF THE INVENTION

In one embodiment, a flexible fuel bladder assembly for an aircraft includes a flexible fuel bladder positioned at an airframe and having an opening to allow a flow of fuel into and/or out of the fuel bladder. A breakaway valve is operably connected to the fuel bladder at the opening to control a flow of fuel therethrough. A non-contacting or loose reaction feature is affixed to the airframe and is interactive with the breakaway valve such that movement of the breakaway valve relative to the reaction feature results in breakage of a valve body of the breakaway valve and closure of the breakaway valve to prevent flow of fuel therethrough.

In accordance with the invention, the reaction feature of the airframe interacts with a reaction flange of the breakaway valve to break the valve body.

Additionally, in other embodiments the reaction feature is a bridge spanning the opening. The reaction bridge includes a bridge opening through which the breakaway valve at least partially extends.

Additionally or alternatively, in this or other embodiments a first reaction flange is located at a first surface of the reaction bridge and a second reaction flange is located at a second surface of the reaction bridge opposite the first surface.

In accordance with the invention, the reaction feature is a reaction collar affixed to the airframe at the opening, a reaction flange has a flange outer diameter greater than a collar outer diameter and in this or other embodiments a cup is affixed to the fuel bladder and secured to the airframe at a first airframe surface. The reaction collar is secured to the airframe at a second airframe surface opposite the first airframe surface. The valve body is secured to the cup.

In another embodiment, an aircraft includes an airframe and an engine located at the airframe. A flexible fuel bladder is located at the airframe and is in flow communication with the engine, having an opening to allow a flow of fuel into and/or out of the flexible fuel bladder. A fuel line is located at the opening. A breakaway valve operably connects the fuel bladder to the fuel line at the opening to control a flow of fuel therethrough. A non-contacting or loose fitting reaction feature is affixed to the airframe and is interactive with the breakaway valve such that movement of the breakaway valve relative to the reaction feature results in breakage of a valve body of the breakaway valve and closure of the breakaway valve to prevent flow of fuel therethrough as well as to also allow the fuel line to act directly on the breakaway valve if it should be pulled upon.

In accordance with the invention, the reaction feature of the airframe interacts with a reaction flange of the breakaway valve to break the valve body.

Additionally, in this or other embodiments the reaction feature is a bridge spanning the opening. The reaction bridge includes a non-contacting or loose fitting bridge opening through which the breakaway valve at least partially extends.

Additionally or alternatively, in this or other embodiments a first reaction flange is located at a first surface of the reaction bridge and a second reaction flange is located at a second surface of the reaction bridge opposite the first surface.

In accordance with the invention, the reaction feature is a reaction collar affixed to the airframe at the opening, a reaction flange has a flange outer diameter greater than a collar outer diameter and a cup is affixed to the fuel bladder and secured to the airframe at a first airframe surface. The reaction collar is secured to the airframe at a second airframe surface opposite the first airframe surface. The valve body is secured to the cup.

Additionally or alternatively, in this or other embodiments the opening is one of a fuel fill opening or a fuel feed opening.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic view of an embodiment of a helicopter;
FIG. 2 is a perspective view of an embodiment of a flexible fuel bladder installed within the structure of an aircraft;
FIG. 3 is a cross sectional view of an embodiment of a flexible fuel bladder installed in an aircraft;
FIG. 4 is a perspective view of an embodiment of a flexible fuel bladder installed in an aircraft;
FIG. 5 is a view of an example not falling within the scope of the invention, showing a fuel feed valve for a fuel bladder;
FIG. 6 is a cross-sectional view of an illustrative example of a fuel feed valve for a fuel bladder; and
FIG. 7 is a cross-sectional view of an embodiment of a fuel filler valve for a fuel bladder.
The detailed description explains embodiments of the invention, together with advantages and features, by way of example with reference to the drawings.

### DETAILED DESCRIPTION OF THE INVENTION

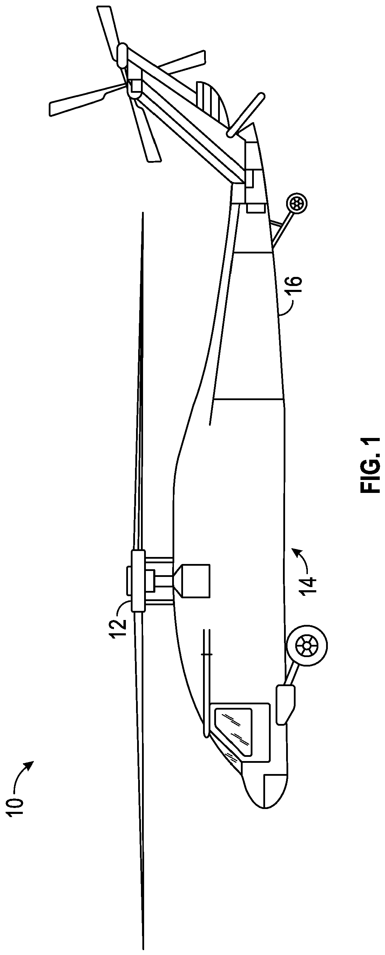

Shown in FIG. 1 is a schematic of a rotary wing aircraft, in this embodiment, a helicopter 10. The helicopter 10 includes a main rotor assembly 12, and a fuselage 14 having an extending tail 16.

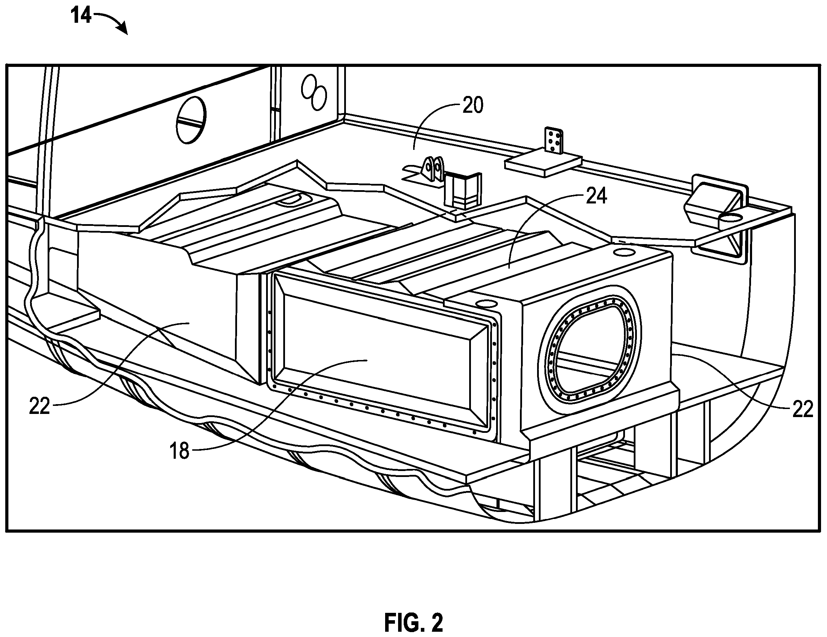

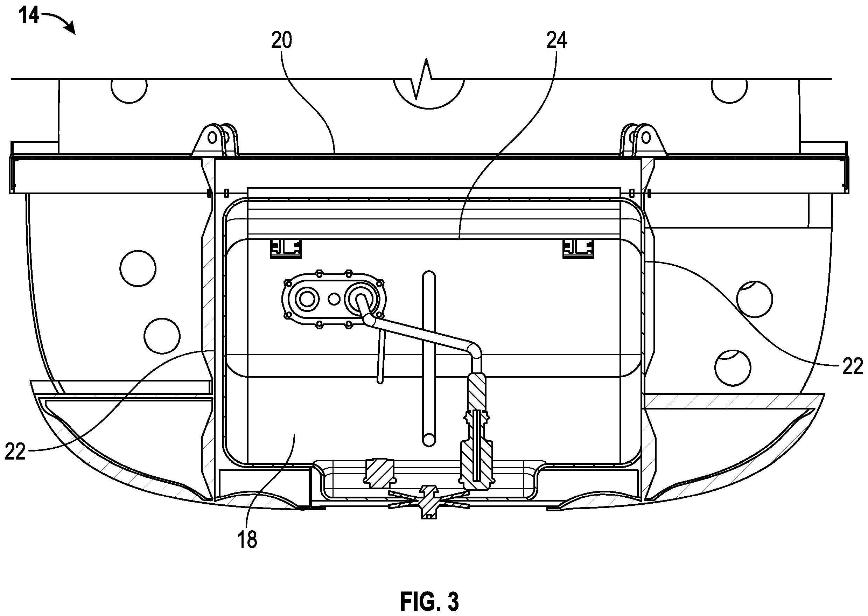

Referring to FIGs. 2 and 3, a flexible fuel bladder 18 is located in the fuselage 14. The bladder 18 is positioned in the fuselage 14 below a deck, for example, a transmission deck 20 and between two keels 22, which in some embodiments extend substantially perpendicular to the transmission deck 20. The bladder 18 includes a top portion 24 closest to the transmission deck 20.

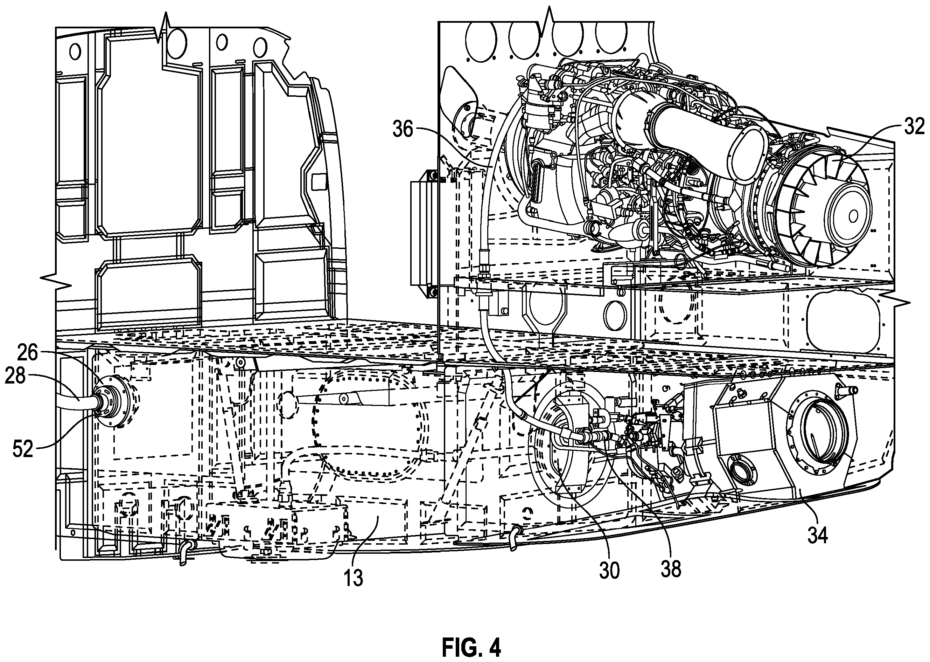

Referring to FIG. 4, the bladder 18 includes a fuel fill opening 26 for a gravity-driven fuel fill line 28 and further includes a fuel feed opening 30 through which fuel is directed to an engine 32 and an auxiliary power unit 34 via fuel feed lines 36 and 38.

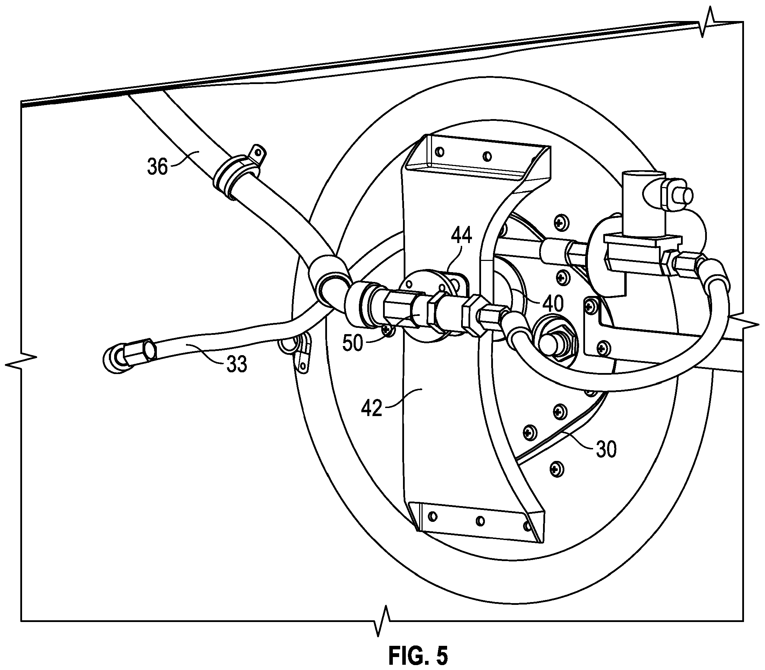

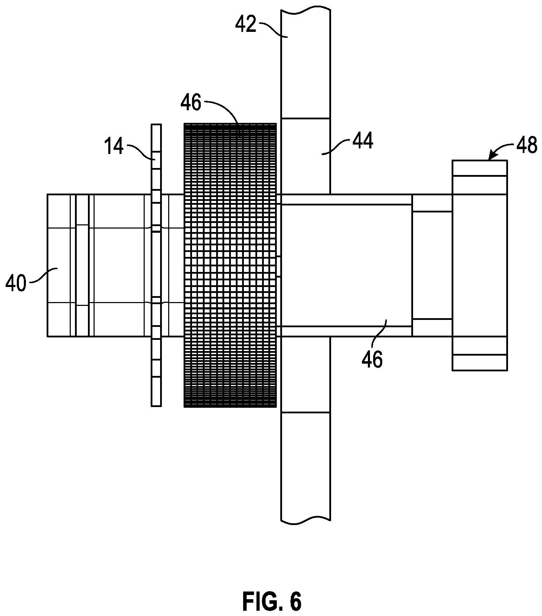

Referring now to FIG. 5, a fuel feed breakaway valve (FFBV) 40 is disposed at the fuel feed opening 30. The FFBV 40 is configured to close should it become forcibly disconnected from the fuel feed lines 36, 38 thereby preventing fuel leakage from the bladder 18 into the helicopter 10. A reaction bridge 42 is secured to the fuselage 14 and spans the fuel feed opening 30. The reaction bridge 42 includes a bridge opening 44 into which a throat portion 46, referring now to FIG. 6, of the FFBV 40 is inserted. In some examples, the bridge opening 44 is rectangular or square and is sized loosely to allow for rotation and other movement of the FFBV 40 relative to the reaction bridge 42. The FFBV 40 includes features to limit the amount of movement of the FFBV 40, and to prevent the FFBV 40 from being pulled or pushed entirely through the bridge opening 44. For example, the FFBV 40 includes a mount flange 46 between the reaction bridge 42 and the fuel feed opening 30, and an end flange 48 at an opposing side of the bridge opening 44 from the mount flange 46. Both the end flange 48 and the mount flange 46 are sized such that the end flange 48 and the mount flange 46 cannot pass through the bridge opening 44. The end flange 48 connects the FFBV 40 to, for example a T-fitting 50 which, in turn is connected to fuel feed lines 36 and 38 to distribute fuel to the engine 32 and the auxiliary power unit 34. With the FFBV 40 captured by the reaction bridge 42, substantial movement of the fuel bladder 18 and/or the fuel lines 36 and 38, such as in a crash event, will cause sufficient stresses on the FFBV 40 to break the FFBV 40, resulting in its closure. The closure prevents fuel from leaking from the fuel bladder 18 via the fuel feed opening 30.

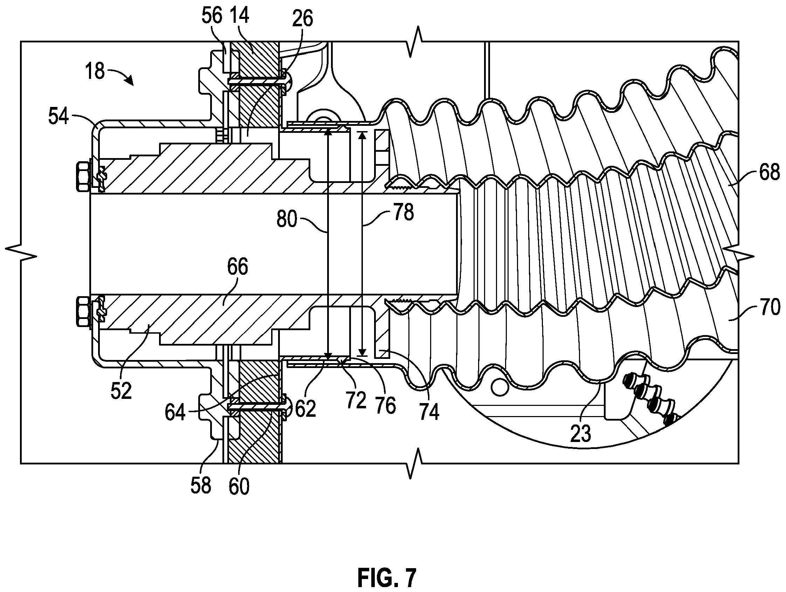

Referring again to FIG. 4, the bladder 18 is filled via the gravity-driven fuel fill line 28 secured at the fuel fill opening 26, and includes a gravity fill breakaway valve (GFBV) 52 connecting the fuel fill line 28 to the bladder 18, as shown in more detail in FIG. 7. The GFBV 52 is affixed to the bladder 18 via a cup 54 connected to the bladder 18, with the cup 54 affixed to a bladder wall 56 and to a first fuselage surface 58 at the fuel fill opening 26 via one or more fasteners 60, or other attachment means. A reaction collar 62 is affixed to a second fuselage surface 64 opposite the first fuselage surface 58 at the fuel fill opening 26. The GFBV 52 includes a valve body 66 extending from the cup 54, through the fuel fill opening 26, through the reaction collar 62 and further into a fuel passage fill line 68 located within a fuel vapor barrier hose 28. In some embodiments, the valve body 66 is coaxial with the reaction collar 62 and the fuel fill line 68. The vapor barrier hose 28 further includes a vapor passage 70 radially outboard of the fuel passage fill line 68 which fits over the reaction collar 62. In some embodiments, the vapor passage 70 seals to the reaction collar 62 via a rib 72 disposed at the reaction collar 62, or alternatively at the cuff portion of the vapor barrier hose 28.

The valve body 66 includes a reaction flange 74 extending radially outwardly from the valve body 66 and located axially beyond a collar end 76 such that the collar end 76 is located axially between the reaction flange 74 and cup 54. The reaction flange 74 has a flange outer diameter 78 greater than a collar outer diameter 80 of the collar end 76. The reaction collar 62 and the reaction flange 74 are configured and aligned such that when the fuel bladder 18 moves relative to the fuselage 14, the valve body 66 moves with the bladder 18. In doing so, the reaction flange 74 impacts the collar end 76, and results in breakage of the valve body 66. Breakage of the valve body 66 results in closure of the GFBV 52, preventing fuel leakage from the bladder 18 via the fuel fill opening 26.

While the invention has been described in detail in connection with only a limited number of embodiments, it should be readily understood that the invention is not limited to such disclosed embodiments. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A flexible fuel bladder assembly for an aircraft (10), comprising:
a flexible fuel bladder (18) disposed at an airframe (14) and having an opening (26) to allow a flow of fuel into and/or out of the fuel bladder (18);
a gravity fill breakaway valve (52) operably connected to the fuel bladder (18) at the opening (26) to control a flow of fuel therethrough, the gravity fill breakaway valve (52) being affixed to the fuel bladder (18) via a cup (54) connected to the fuel bladder (18), with the cup (54) being affixed to a bladder wall (56) and to a first fuselage surface (58) at the opening (26) via one or more fasteners (60), or other attachment means, the gravity fill breakaway valve (52) including a valve body (66); and
a reaction collar (62), affixed to a second fuselage surface (64) opposite the first fuselage surface (58) at the opening (26),and the reaction collar (62) being non-contacting or loose with respect to, and interactive with, the breakaway valve (52) such that movement of the breakaway valve (52) relative to the reaction collar (62) results in breakage of the valve body (66) of the breakaway valve (52) and closure of the breakaway valve (52) to prevent flow of fuel therethrough,
wherein the valve body (66) includes a reaction flange (74) extending radially outwardly from the valve body (66), having a flange outer diameter (78) greater than a collar outer diameter (80) of the collar end (76) and located axially beyond a collar end (76) such that the collar end (76) is located axially between the reaction flange (74) and the cup (54),
wherein the valve body (66) extends from the cup (54), through the fuel fill opening (26), through the reaction collar (62) and further into a fuel passage fill line (68) located within a fuel vapor barrier hose (28), and
the reaction collar (62) and the reaction flange (74) are configured and aligned such that when the fuel bladder (18) moves relative to the fuselage (14), the valve body (66) moves with the bladder (18), such that the reaction flange (74) impacts the collar end (76), and results in breakage of the valve body (66), the breakage of the valve body (66) resulting in closure of the gravity fill breakaway valve (52), preventing fuel leakage from the bladder (18) via the fuel fill opening (26).

2. The flexible fuel bladder assembly of claim 1, further comprising a bridge spanning the opening (26), the bridge including a bridge opening (44) through which the gravity fill breakaway valve (52) at least partially extends.

3. The flexible fuel bladder assembly of claim 2, further comprising:
a first reaction flange (74) disposed at a first surface of the reaction bridge (42); and
a second reaction flange (74) disposed at a second surface of the reaction bridge (42) opposite the first surface.

4. An aircraft comprising:
an airframe (14);
an engine (32) disposed at the airframe (14);
a flexible fuel bladder assembly according to one of claims 1-3,
the flexible fuel bladder (18) disposed at the airframe (14) and in flow communication with the engine (32); and
a fuel line disposed at the opening (26) such that the fuel line acts directly on the gravity fill breakaway valve (52) if it should be pulled upon.

5. The aircraft of claim 4, wherein the opening (26) is one of a fuel fill opening or a fuel feed opening (30).

## Patentansprüche

1. Flexible Brennstoffblasenanordnung für ein Luftfahrzeug (10), umfassend:
eine flexible Brennstoffblase (18), die an einer Luftfahrzeugzelle (14) angeordnet ist und eine Öffnung (26) aufweist, um einen Brennstoffstrom in die Brennstoffblase (18) und/oder aus dieser heraus zu ermöglichen;
ein Schwerkraftfüllungsabreißventil (52), das wirksam mit der Brennstoffblase (18) an der Öffnung (26) verbunden ist, um einen Brennstoffstrom dadurch zu steuern, wobei das Schwerkraftfüllungsabreißventil (52) an der Brennstoffblase (18) mittels einer Schale (54), die mit der Brennstoffblase (18) verbunden ist, angebracht ist, wobei die Schale (54) an einer Blasenwand (56) und an einer ersten Rumpffläche (58) an der Öffnung (26) mittels einer oder mehrerer Halterungen (60) oder anderer Befestigungsmittel angebracht ist, wobei das Schwerkraftfüllungsabreißventil (52) einen Ventilkörper (66) beinhaltet; und
einen Reaktionskragen (62), der an einer zweiten Rumpffläche (64) gegenüber der ersten Rumpffläche (58) an der Öffnung (26) angebracht ist, und wobei der Reaktionskragen (62) das Abreißventil (52) nicht berührt oder in Bezug auf dieses lose ist und mit diesem wechselwirkt, so dass eine Bewegung des Abreißventils (52) relativ zu dem Reaktionskragen (62) zu einem Brechen des Ventilkörpers (66) des Abreißventils (52) und dem Verschluss des Abreißventils (52) führt, um einen Brennstoffstrom dadurch zu verhindern,
wobei der Ventilkörper (66) einen Reaktionsflansch (74) beinhaltet, der sich radial nach außen von dem Ventilkörper (66) erstreckt, einen Flanschaußendurchmesser (78) aufweist, der größer als ein Kragenaußendurchmesser (80) des Kragenendes (76) ist, und axial über ein Kragenende (76) hinaus angeordnet ist, so dass das Kragenende (76) axial zwischen dem Reaktionsflansch (74) und der Schale (54) angeordnet ist,
wobei sich der Ventilkörper (66) von der Schale (54), durch die Brennstofffüllöffnung (26), durch den Reaktionskragen (62) und weiter in eine Brennstoffkanalfüllleitung (68), die innerhalb eines Brennstoffdampfsperrenschlauchs (28) angeordnet ist, erstreckt, und
der Reaktionskragen (62) und der Reaktionsflansch (74) so konfiguriert und ausgerichtet sind, dass, wenn sich die Brennstoffblase (18) relativ zum Rumpf (14) bewegt, sich der Ventilkörper (66) mit der Blase (18) bewegt, so dass der Reaktionsflansch (74) auf das Kragenende (76) aufprallt und zum Brechen des Ventilkörpers (66) führt, wobei das Brechen des Ventilkörpers (66) zum Verschluss des Schwerkraftfüllungsabreißventils (52) führt, was ein Brennstoffausströmen von der Blase (18) über die Brennstofffüllöffnung (26) verhindert.

2. Flexible Brennstoffblasenbaugruppe nach Anspruch 1, ferner eine Brücke umfassend, die die Öffnung (26) überspannt, wobei die Brücke eine Brückenöffnung (44) beinhaltet, durch die sich das Schwerkraftfüllungsabreißventil (52) mindestens teilweise erstreckt.

3. Flexible Brennstoffblasenbaugruppe nach Anspruch 2, ferner Folgendes umfassend:
einen ersten Reaktionsflansch (74), der an einer ersten Fläche der Reaktionsbrücke (42) angeordnet ist; und
einen zweiten Reaktionsflansch (74), der an einer zweiten Fläche der Reaktionsfläche (42), die der ersten Fläche gegenüberliegt, angeordnet ist.

4. Luftfahrzeug, umfassend:
eine Luftfahrzeugzelle (14);
ein Triebwerk (32), das an der Luftfahrzeugzelle (14) angeordnet ist;
eine flexible Brennstoffblasenanordnung nach einem der Ansprüche 1-3, wobei die flexible Brennstoffblase (18) an der Luftfahrzeugzelle (14) und in Strömungskommunikation mit dem Triebwerk (32) angeordnet ist; und
eine Brennstoffleitung, die so an der Öffnung (26) angeordnet ist, dass die Brennstoffleitung direkt auf das Schwerkraftfüllungsabreißventil (52) wirkt, wenn daran gezogen wird.

5. Luftfahrzeug nach Anspruch 4, wobei die Öffnung (26) eine aus einer Brennstofffüllöffnung oder einer Brennstoffzufuhröffnung (30) ist.

## Revendications

1. Ensemble réservoir de carburant souple pour un aéronef (10), comprenant :
un réservoir de carburant souple (18) disposé au niveau d'une cellule (14) et ayant une ouverture (26) pour permettre un écoulement de carburant dans et/ou hors du réservoir de carburant (18) ;
une soupape d'arrêt de remplissage par gravité (52) reliée fonctionnellement au réservoir de carburant (18) au niveau de l'ouverture (26) pour commander un écoulement de carburant à travers celle-ci, la soupape d'arrêt de remplissage par gravité (52) étant fixée au réservoir de carburant (18) par l'intermédiaire d'une coupelle (54) reliée au réservoir de carburant (18), la coupelle (54) étant fixée à une paroi de réservoir (56) et à une première surface de fuselage (58) au niveau de l'ouverture (26) par l'intermédiaire d'une ou de plusieurs attaches (60), ou d'autres moyens de fixation, la soupape d'arrêt de remplissage par gravité (52) comportant un corps de soupape (66) ; et
un collier de réaction (62), fixé à une seconde surface de fuselage (64) opposée à la première surface de fuselage (58) au niveau de l'ouverture (26), et le collier de réaction (62) étant sans contact ou lâche par rapport à, et interactif avec, la soupape d'arrêt (52) de sorte que le mouvement de la soupape d'arrêt (52) par rapport au collier de réaction (62) entraîne la rupture du corps de soupape (66) de la soupape d'arrêt (52) et la fermeture de la soupape d'arrêt (52) pour empêcher l'écoulement de carburant à travers celle-ci,
dans lequel le corps de soupape (66) comporte une bride de réaction (74) s'étendant radialement vers l'extérieur depuis le corps de soupape (66) ayant un diamètre extérieur de bride (78) supérieur à un diamètre extérieur de collier (80) de l'extrémité de collier (76) et situé axialement au-delà d'une extrémité de collier (76) de sorte que l'extrémité de collier (76) est située axialement entre la bride de réaction (74) et la coupelle (54),
dans lequel le corps de soupape (66) s'étend depuis la coupelle (54), à travers l'ouverture de remplissage de carburant (26), à travers le collier de réaction (62) et plus loin dans une conduite de remplissage de passage de carburant (68) située à l'intérieur d'un tuyau pare-vapeur de carburant (28), et
le collier de réaction (62) et la bride de réaction (74) sont configurés et alignés de sorte que lorsque le réservoir de carburant (18) se déplace par rapport au fuselage (14), le corps de soupape (66) se déplace avec le réservoir (18), de sorte que la bride de réaction (74) heurte l'extrémité de collier (76) et entraîne la rupture du corps de soupape (66), la rupture du corps de soupape (66) entraînant la fermeture de la soupape d'arrêt de remplissage par gravité (52), empêchant le carburant de fuir du réservoir (18) par l'intermédiaire de l'ouverture de remplissage de carburant (26).

2. Ensemble réservoir de carburant souple selon la revendication 1, comprenant en outre un pont enjambant l'ouverture (26), le pont comportant une ouverture de pont (44) à travers laquelle s'étend au moins partiellement la soupape d'arrêt de remplissage par gravité (52).

3. Ensemble réservoir de carburant souple selon la revendication 2, comprenant en outre :
une première bride de réaction (74) disposée sur une première surface du pont de réaction (42) ; et
une seconde bride de réaction (74) disposée sur une seconde surface du pont de réaction (42) opposée à la première surface.

4. Aéronef comprenant :
une cellule (14) ;
un moteur (32) disposé au niveau de la cellule (14) ;
un ensemble réservoir de carburant souple selon l'une des revendications 1 à 3, le réservoir de carburant souple (18) étant disposé au niveau de la cellule (14) et en communication fluidique avec le moteur (32) ; et
une conduite de carburant disposée au niveau de l'ouverture (26) de sorte que la conduite de carburant agit directement sur la soupape d'arrêt de remplissage par gravité (52) si elle doit être tirée.

5. Aéronef selon la revendication 4, dans lequel l'ouverture (26) est l'une d'une ouverture de remplissage de carburant ou d'une ouverture d'alimentation en carburant (30).
